# EUROPÄISCHE PATENTANMELDUNG

(11) **EP 2 584 678 A2**
(43) Veröffentlichungstag der Anmeldung: **24.04.2013**
(21) Anmeldenummer: 12188699.8
(22) Anmeldetag: 16.10.2012
(51) Int. Cl.: H02K 11/00

(54) **Elektromotor mit einem Drehwinkelgeber**

(30) Priorität: 17.10.2011 DE 102011084627
(71) Anmelder: Dunkermotoren GmbH, 79848 Bonndorf/Schwarzwald (DE)
(72) Erfinder: Ravic, Robert, 78176 Blumberg (DE); Kenne, Daniel, 79780 Stühlingen (DE)
(74) Vertreter: Dreiss

(57) **Zusammenfassung**

Die Erfindung betrifft einen Elektromotor (11) mit einem Drehwinkelgeber (15), wobei der Drehwinkelgeber (15) ein einer Welle (17) des Motors zugeordnetes Geberelement (43) aufweist. Um den Elektromotor (11) leicht demontieren zu können, wird vorgeschlagen, dass die Welle (17) ein Anlageelement (57) aufweist, das zum Begrenzen einer Bewegung des an dem Anlageelement (57) anliegenden Geberelements (43) in Längsrichtung der Welle (17) eingerichtet ist, und dass der Drehwinkelgeber (15) Befestigungsmittel (70) umfasst, mit denen das Geberelement (43) derart lösbar an der Welle (17) befestigbar ist, dass das Geberelement (43) in der Längsrichtung neben dem Anlageelement (57) an demselben anliegt.

## Beschreibung

Die Erfindung betrifft einen Elektromotor mit einem Drehwinkelgeber, wobei der Drehwinkelgeber ein einer Welle des Motors zugeordnetes Geberelement aufweist.

Ein solcher Elektromotor ist allgemein bekannt. Er wird üblicherweise zusammen mit einer Regelung als Bestandteil eines Servoantriebs eingesetzt. Der Elektromotor kann bürstenlos oder bürstenbehaftet oder auf sonstige Weise ausgebildet sein. Der Drehwinkelgeber kann beispielsweise eine Geberscheibe aufweisen, die optisch oder magnetisch oder auf sonstige Weise abgetastet wird.

Bauteile des Drehwinkelgebers sind bei dem bekannten Elektromotor derart an einer Welle des Elektromotors angeordnet, dass eine Demontage des Elektromotors nicht möglich ist, ohne den Drehwinkelgeber oder den Elektromotor zu zerstören. Insbesondere versperrt der Drehwinkelgeber des bekannten Elektromotors den Zugang zu wartbaren Teilen des Elektromotors wie beispielsweise einen Kollektor oder Kohlen. Aus diesem Grund können die Kohlen des bekannten Elektromotors nicht einfach ausgetauscht werden. Sobald die Kohlen des bekannten Elektromotors abgenutzt sind, muss der gesamte Elektromotor entsorgt und durch einen neuen Elektromotor desselben Typs ersetzt werden. Geräte oder Maschinen, die mit dem bekannten Elektromotor ausgestattet sind, sind deshalb relativ teuer in der Wartung.

Die Aufgabe der vorliegenden Erfindung besteht darin, einen Elektromotor bereitzustellen, dessen Drehwinkelgeber leicht vom Elektromotor demontiert werden kann und somit eine einfache Wartbarkeit des Elektromotors gegeben ist.

Zur Lösung dieser Aufgabe wird ein Elektromotor gemäß Anspruch 1 vorgeschlagen.

In einer Ausführungsform der Erfindung ist ein Elektromotor der eingangs genannten Art vorgesehen, der dadurch gekennzeichnet ist, dass die Welle ein Anlageelement aufweist, das zum Begrenzen einer Bewegung des an dem Anlageelement anliegenden Geberelements in Längsrichtung der Welle eingerichtet ist, und dass der Drehwinkelgeber Befestigungsmittel umfasst, mit denen das Geberelement derart lösbar an der Welle befestigt werden kann, dass das Geberelement in der Längsrichtung neben dem Anlageelement an demselben anliegt.

Das Anlageelement legt also eine Position des Geberelements in Längsrichtung der Welle fest, und die Befestigungsmittel ermöglichen es, dass das Geberelement beliebig oft an der Welle befestigt werden kann, sodass es an dem Anlageelement anliegt, und wieder von der Welle entfernt werden kann. Das montierte Geberelement ist also lösbar an der Welle derart befestigt, dass es in der Längsrichtung neben dem Anlageelement an demselben anliegt. Das Anlageelement und die Befestigungsmittel wirken derart zusammen, dass die Position in Längsrichtung der Welle des an der Welle befestigten Geberelements zuverlässig festgelegt wird und zudem eine einfache Befestigung und ein einfaches Lösen des Geberelements möglich sind. Weil das Geberelement einfach an die Welle befestigt und wieder von ihr entfernt werden kann, lässt sich der Elektromotor leicht beispielsweise zu Wartungszwecken demontieren und nach der Wartung wieder zusammenbauen.

Die vorliegende Erfindung ist im Zusammenhang mit jeder Art von Elektromotoren anwendbar. Jedoch ist bevorzugt, dass es sich bei dem Elektromotor um einen Kollektormotor handelt, dessen Kollektor an der Welle zwischen einer Läuferwicklung und dem Geberelement angeordnet ist. Wird bei einem solchen Elektromotor das Geberelement entfernt, dann ist der Kollektor besonders leicht zugänglich, und die Kohlen können mit geringem Aufwand ausgetauscht werden. Insgesamt ergibt sich ein Elektromotor, der wegen seiner guten Wartbarkeit eine längere Lebensdauer aufweist als der bekannte Elektromotor, der nicht gewartet werden kann.

Vorzugsweise ist das Anlageelement der Welle derart ausgestaltet, dass es ein Verschieben des auf der Welle aufgesetzten Geberelements in Längsrichtung der Welle verhindert, sobald das Geberelement an dem Anlageelement anliegt. Somit kann das Anlageelement beispielsweise als eine radial von einer Mittelachse der Welle abragende Stufe der Welle ausgebildet sein.

Die Stufe kann beispielsweise dadurch hergestellt werden, dass das Anlageelement als eine an der Welle angeordnete, gegen Verschieben in Längsrichtung der Welle gesicherte Anlagebuchse ausgebildet ist. Zum Sichern der Buchse gegen Verschieben gegenüber der Welle kann beispielsweise eine Schraube vorgesehen sein, mit der die Anlagebuchse an der Welle fixiert wird. Es ist jedoch auch denkbar, das Anlageelement auf andere Weise zu realisieren. Beispielsweise kann die Stufe in die Welle durch Drehen eingeformt sein.

In einer bevorzugten Ausführungsform weist das Geberelement zwei ineinander verpresste Buchsen auf, zwischen denen eine Geberscheibe drehfest eingeklemmt ist. Die beiden ineinander verpressten Buchsen des Geberelements können auf die Welle aufgesetzt werden und leicht wieder von ihr entfernt werden. Solange das Geberelement, insbesondere eine der beiden Buchsen, nicht an dem Anlageelement anstößt und nicht an dem Befestigungsmittel befestigt ist, lässt es sich auf der Welle verschieben. Jedoch sorgen die beiden Buchsen dafür, dass die Geberscheibe zentriert ist, sobald das Geberelement auf die Welle aufgesetzt ist, das heißt die Geberscheibe konzentrisch mit der Welle angeordnet ist.

Es ist bevorzugt, dass das Geberelement an einem Ende der Welle angeordnet ist.

In einer bevorzugten Ausführungsform bildet ein erstes Ende der Welle einen Antriebsabschnitt der Welle, der mit von dem Elektromotor anzutreibenden Bauelementen eines Gerätes, in das der Elektromotor eingebaut werden soll, verbunden werden kann. Das Geberelement kann an einem von dem ersten Ende abgewandten zweiten Ende der Welle angeordnet sein.

Es ist besonders bevorzugt, dass die Befestigungsmittel einen in einer Längsrichtung der Welle in der Welle verlaufende Innengewindeabschnitt aufweisen, der zu dem Ende der Welle hin offen ist, an dem das Geberelement angeordnet ist, wobei die beiden Buchsen des an der Welle befestigten Geberelements an dem Innengewinde angeschraubt sind. Die als eine solche Schraubverbindung realisierten Befestigungsmittel lassen sich relativ leicht herstellen und können bei der Erstmontage des Geberelements an dem Elektromotor und bei der Wartung des Elektromotors einfach angewendet werden. In einer Ausführungsform weist der Drehwinkelgeber ein Gebergehäuse auf, das mit einem Motorgehäuse des Motors verbunden ist, wobei die Welle durch eine erste Öffnung des Motorgehäuses und eine zweite Öffnung des Gebergehäuses verläuft, wobei sich die erste Öffnung und die zweite Öffnung gegenüberliegen. In anderen Worten, ein Motorabschnitt des Elektromotors und der Drehwinkelgeber des Elektromotors sind nebeneinander an der Welle angeordnet. Dementsprechend sind auch das Gebergehäuse und das Motorgehäuse nebeneinander angeordnet. Die Welle ragt durch die beiden gegenüberliegenden Öffnungen des Gebergehäuses und des Motorgehäuses.

Hierbei ist bevorzugt, dass ein Durchmesser der ersten Öffnung und/oder der zweiten Öffnung größer ist als ein Außendurchmesser des Anlageelements, insbesondere der Anlagebuchse. Hierdurch wird erreicht, dass die Welle mit samt dem Anlageelement durch die Öffnungen des Gebergehäuses und/oder des Motorgehäuses gezogen werden kann. Hierdurch wird die Montage und Demontage des Elektromotors erleichtert. Falls das Anlageelement als die Anlagebuchse ausgebildet ist, braucht diese bei Wartungsarbeiten nicht von der Welle entfernt werden. Hierdurch wird sichergestellt, dass das Anlageelement auch nach einer Demontage des Geberelements von dem Elektromotor und anschließender erneuten Montage des Geberelements an dem Elektromotor die richtige Position in Längsrichtung der Welle vorgibt, sodass die Geberscheibe stets richtig in Längsrichtung bezüglich der Welle positioniert ist.

Weitere Merkmale und Vorteile der Erfindung ergeben sich aus der nachfolgenden Beschreibung, in welcher exemplarische Ausführungsformen der Erfindung anhand der Zeichnungen näher erläutert werden. Dabei zeigen:
- Figur 1: eine geschnittene Seitenansicht eines Elektromotors gemäß einer Ausführungsform der Erfindung;
- Figur 2: ein Detail der Darstellung aus Figur 1; und
- Figur 3: eine geschnittene Draufsicht auf einen Drehwinkelgeber des Elektromotors aus den Figuren 1 und 2.

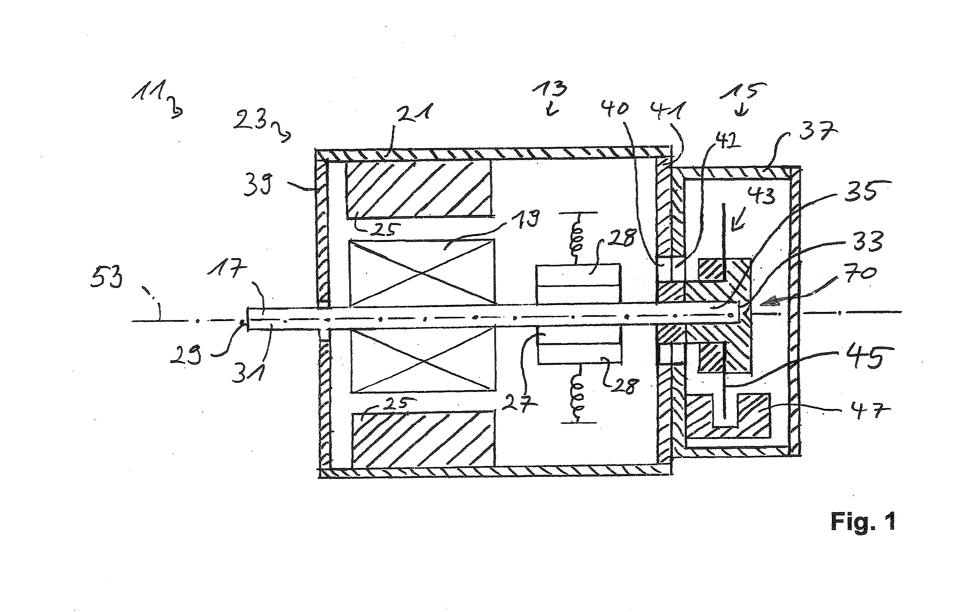

Figur 1 zeigt einen Elektromotor 11 mit einem Motorabschnitt 13 und einen Drehwinkelgeber 15. Bei dem hier gezeigten Elektromotor 11 handelt es sich um einen permanent erregten Gleichstrommotor mit einer an einer Welle 17 angeordneten Läuferwicklung 19 und einem an einer Innenseite eines zylindrischen Gehäuseabschnitts 21 eines Motorgehäuses 23 des Elektromotors 11 angeordneten schalenförmigen Arbeitsmagneten 25.

Zwischen der Läuferwicklung 19 und dem Drehwinkelgeber 15 ist an der Welle 17 ein Kollektor 27 angeordnet, gegen dessen Kontaktflächen beispielsweise als Kohlen 28 ausgebildete Bürsten des Elektromotors 11 drücken.

An einem in Figur 1 links dargestellten ersten Ende 29 der Welle 17 ist ein Antriebsabschnitt 31 der Welle 17 vorgesehen, welcher aus dem Motorgehäuse 23 des Elektromotors 11 herausragt. Der Antriebsabschnitt 31 kann mit einem anzutreibenden Teil eines Geräts, in das der Elektromotor 11 eingebaut ist, verbunden werden. Beispielsweise kann am Antriebsabschnitt 31 ein Zahnrad oder dergleichen angeordnet sein. Der Antriebsabschnitt 31 kann auch mit einer weiteren Welle verbunden werden.

An einem dem antriebsseitigen ersten Ende 29 gegenüberliegenden zweiten Ende 33 der Welle 17 ist der Drehwinkelgeber 15 angeordnet. Ein Abschnitt der Welle 17 an dem zweiten Ende 33 bildet einen Geberabschnitt 35 der Welle 17, der aus dem Motorgehäuse 23 herausragt und in ein Gebergehäuse 37 des Drehwinkelgebers 15 hineinragt. In der gezeigten Ausführungsform mit dem insgesamt zylinderartig geformten Motorgehäuse 23 ragt der Antriebsabschnitt 31 aus einer Öffnung in einem zweiten Motorgehäuseabschnitt 39 aus dem Motorgehäuse 23 heraus. Der Geberabschnitt 35 ragt aus einer ersten Geberöffnung 40 des Motorgehäuses 23 heraus, welche sich an einem dritten Motorgehäuseabschnitt 41 des Motorgehäuses 23 befindet. In der gezeigten Ausführungsform bildet der erste Motorgehäuseabschnitt 21 einen Zylindermantel des zylinderförmigen Gehäuses 23, und der zweite Motorgehäuseabschnitt 39 sowie der dritte Motorgehäuseabschnitt 41 bilden einander gegenüberliegende Deckflächen des insgesamt zylinderförmigen Gehäuses 23.

Die Welle 17 ragt auch durch eine zweite Geberöffnung 42 des Gebergehäuses 37. Das Gebergehäuse ist derart an dem Motorgehäuse 23 befestigt, dass die erste Geberöffnung 40 und die zweite Geberöffnung 42 vorzugsweise deckungsgleich nebeneinander liegen.

Der Drehwinkelgeber 15 weist ein Geberelement 43 mit einer vorzugsweise kreisscheibenförmigen Geberscheibe 45 auf. Ferner umfasst der Drehwinkelgeber 15 einen Sensor 47, der zum Erfassen einer Position der Geberscheibe 45 eingerichtet sein kann. In der gezeigten Ausführungsform weist die Geberscheibe 45 ein vorzugsweise entlang einer mit der Welle 17 konzentrischen Kreisbahn angeordnetes Lochmuster auf und der Sensor 47 umfasst eine oder mehrere Gabellichtschranken, die zum Erfassen einzelner Löcher des Lochmusters eingerichtet sind. Es versteht sich, dass die Geberscheibe 45 auch reflexiv ausgebildet und der Sensor 47 entsprechend angepasst sein kann. Der Drehwinkelgeber 15 kann beispielsweise als Inkrementalgeber ausgebildet sein. Mit Hilfe einer Auswerteeinrichtung kann der Drehwinkelgeber 15 zum Erfassen eines Betrags und/oder der Richtung und/oder der Drehzahl einer Drehung der Welle 17 vorgesehen sein.

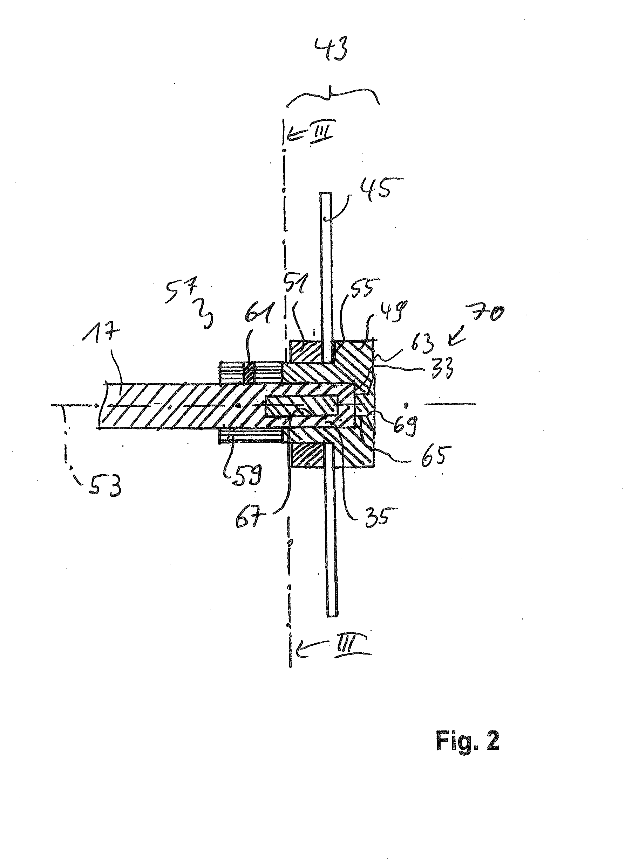

Aus Figur 2 ist erkennbar, dass das Geberelement 43 eine erste Buchse 49 aufweist, die in eine zweite Buchse 51 des Geberelements 43 eingepresst ist. Zwischen den beiden Buchsen 49, 51 des Geberelements 43 ist die Geberscheibe 45 eingeklemmt, sodass sie drehfest mit den beiden Buchsen 49, 51 verbunden ist und gegen Verschieben relativ zu den Buchsen 49,51 entlang einer Längsachse 53 der beiden Buchsen 49, 51 gesichert ist.

Die erste Buchse 49 weist eine kreisringförmige Klemmfläche 55 auf, die orthogonal zur Längsachse 53 verläuft. Die Geberscheibe 45 ist zwischen der Klemmfläche 55 der ersten Buchse 49 und der zylinderförmigen zweiten Buchse 51 eingeklemmt. Die Klemmfläche 55 bildet eine Stufe an der Außenseite der ersten Buchse 49, die die Außenseite der ersten Buchse 49 in einen Bereich mit geringerem Durchmesser und einen Bereich mit größerem Durchmesser unterteilt. Eine Innenfläche (ohne Bezugszeichen) der zweiten Buchse 51 liegt an dem Abschnitt mit geringerem Durchmesser der Außenseite der ersten Buchse 49 an.

Die Welle 17 weist ein Anlageelement 57 auf, an dem das Geberelement 43 derart anliegt, dass es sich in Längsrichtung der Welle 17 nicht weiter zum ersten Ende 29 hin bewegen kann. In der gezeigten Ausführungsform ist das Anlageelement 57 als eine Anlagebuchse 59 ausgeführt, die beispielsweise mittels einer Madenschraube 61 an der Welle 17 so befestigt ist, dass sich die Anlagebuchse 59 nicht gegenüber der Welle 17 in Längsrichtung der Welle 17 bewegen kann.

Liegt das Geberelement 43 wie in Figur 2 gezeigt mit seiner ersten Buchse 49 an dem Anlageelement 57 in Form der Anlagebuchse 59 an, so kann es sich nicht mehr weiter entlang der Welle 17, dass heißt in der Darstellung von Figur 2 nach links, bewegen. Das Anlageelement 57 gibt auf diese Weise eine Position des Geberelements 43 in axialer Richtung (in Längsrichtung der Welle 17) vor. Nach dem erstmaligen Zusammenbauen des Elektromotors 11 kann die Anlagebuchse 59 dauerhaft mit dem Rest der Welle 17 verbunden bleiben, sodass die axiale Lage des Geberelements 43 nach einer vorrübergehenden Demontage des Elektromotors 11 beispielsweise zu Wartungszwecken beibehalten wird.

Die erste Buchse 49 weist an einer bei auf der Welle 17 aufgesetzten Geberelement 43 von der Welle 17 abgewandten Stirnseite 63 eine mit der Welle 17 konzentrische Bohrung 65 auf. Ebenfalls konzentrisch mit der Welle 17 ist in der Welle 17 ein Innengewindeabschnitt 67 vorgesehen, der an dem zweiten Ende 33 der Welle 17 beginnt. Bei an der Welle 17 befestigtem Geberelement 43 ist in den Innengewindeabschnitt 67 eine Schraube 69 eingeschraubt, die durch die Bohrung 65 verläuft und so das Geberelement gegen das Anlageelement 57, insbesondere gegen die Anlagebuchse 59, drückt. Hierdurch wird das Geberelement 43 drehfest mit der Welle 17 verbunden, wobei eine axiale Position des Geberelements 43 gegenüber der Welle 17 durch das Anlageelement 57 vorgegeben wird. Auf diese Weise bilden die Schraube 69 und der Innengewindeabschnitt der Welle 17 Befestigungsmittel 70, mit denen das Geberelement 43 lösbar an der Welle 17 befestigt werden kann.

Soll beispielsweise zu Wartungszwecken das Geberelement 43 von der Welle 17 entfernt werden, dann wird die Schraube 69 aus dem Innengewindeabschnitt 67 herausgeschraubt und das Geberelement 43 in axialer Richtung von der Welle 17 abgezogen. Zum Zusammenbau des Elektromotors 11 wird das Geberelement 43 wieder auf die Welle 17 aufgesetzt und die Schraube 69 durch die Bohrung 65 geschoben und mit dem Innengewindeabschnitt 67 verschraubt, sodass sich die in Figur 2 gezeigt Anordnung ergibt.

Die Durchmesser der beiden Geberöffnungen 40, 42 sind vorzugsweise größer als ein Außendurchmesser der ersten Buchse 49, sodass die erste Buchse 49 durch die beiden Geberöffnungen 40, 42 hindurch passt. In der gezeigten Ausführungsform sind die Durchmesser der beiden Geberöffnungen 40, 42 gleich (siehe Figur 1). In einer anderen Ausführungsform unterscheiden sich diese Durchmesser voneinander.

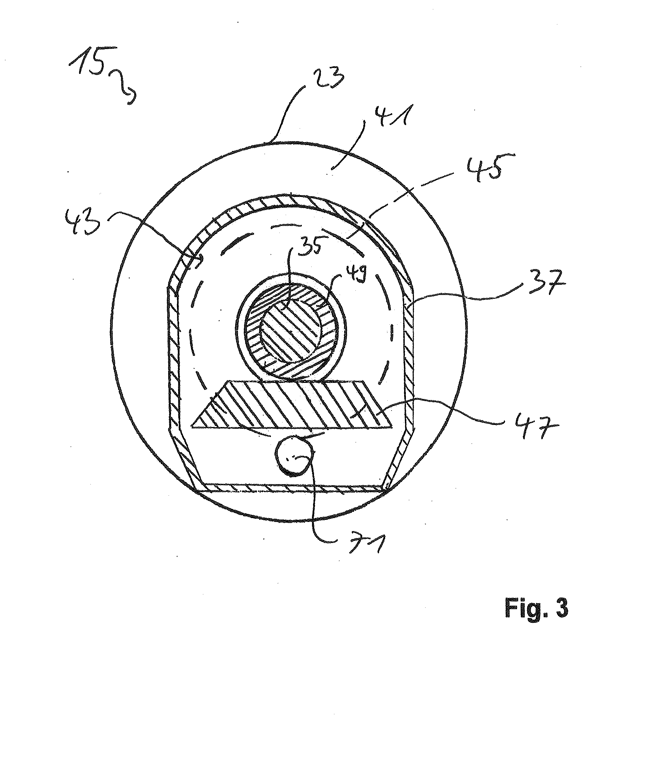

Figur 3 zeigt eine geschnittene Draufsicht auf den Drehwinkelgeber 15 entlang der in den Figuren 1 und 2 eingezeichneten Schnittebene. Der Umriss der Geberscheibe 45 ist als gestrichelte Linie eingetragen. Man erkennt, dass der Geberabschnitt 35 der Welle 17, wie auch aus Figur 2 ersichtlich ist, in einen inneren Bereich der ersten Buchse 49 des auf die Welle 17 aufgesetzten Geberelements 43 hineinragt. Das Gebergehäuse 37 ist mit einer weiteren Schraube 71 am dritten Motorgehäuseabschnitt 41 befestigt. Der Sensor 47 ist lösbar in dem Gebergehäuse 37 angeordnet.

In Figur 3 ist der zusammengebaute Elektromotor 11 dargestellt. Zum Demontieren des Elektromotors 11, insbesondere zum Entfernen der Drehwinkelgebers 15 vom Motorabschnitt 13 wird zunächst die Schraube 69 gelöst und anschließend das Geberelement 43 mit samt dem Sensor 47 in axialer Richtung von dem Geberabschnitt 35 der Welle 17 abgezogen. Danach kann die weitere Schraube 71 gelöst werden und das Gebergehäuse von dem dritten Motorgehäuseabschnitt 41 entfernt werden. Zum Zusammenbau des Elektromotors 11 kann in umgekehrter Reihenfolge vorgegangen werden.

Insgesamt stellt die vorliegende Erfindung den Elektromotor 11 bereit, der einfach zerlegt und wieder zusammengebaut werden kann. Insbesondere kann der Drehwinkelgeber 15 schnell und einfach von dem Motorabschnitt 13 des Elektromotors 11 entfernt werden. Hierdurch werden wartbare Teile, wie beispielsweise der Kollektor 27 und die Kohlen 28 zugänglich. Bei Abnutzung der Kohlen 28 können diese ersetzt werden, wodurch eine relativ lange Gesamtbetriebsdauer des Elektromotors 11 ermöglicht wird.

## Patentansprüche

1. Elektromotor (11) mit einem Drehwinkelgeber (15), wobei der Drehwinkelgeber (15) ein einer Welle (17) des Motors zugeordnetes Geberelement (43) aufweist, **dadurch gekennzeichnet, dass** die Welle (17) ein Anlageelement (57) aufweist, das zum Begrenzen einer Bewegung des an dem Anlageelement (57) anliegenden Geberelements (43) in Längsrichtung der Welle (17) eingerichtet ist, und dass der Drehwinkelgeber (15) Befestigungsmittel (70) umfasst, mit denen das Geberelement (43) derart lösbar an der Welle (17) befestigbar ist, dass das Geberelement (43) in der Längsrichtung neben dem Anlageelement (57) an demselben anliegt.

2. Elektromotor (11) nach Anspruch 1, **dadurch gekennzeichnet, dass** das Anlageelement (57) als eine an der Welle (17) angeordnete, gegen Verschieben in Längsrichtung der Welle (17) gesicherte Anlagebuchse (59) ausgebildet ist.

3. Elektromotor (11) nach einem der vorhergehenden Ansprüche, **dadurch gekennzeichnet, dass** das Geberelement (43) zwei ineinander verpresste Buchsen (49, 51) aufweist, zwischen denen eine Geberscheibe (45) drehfest eingeklemmt ist.

4. Elektromotor (11) nach einem der vorhergehenden Ansprüche, **dadurch gekennzeichnet, dass** das Geberelement (43) an einem Ende (29) der Welle (17) angeordnet ist.

5. Elektromotor (11) nach einem der vorhergehenden Ansprüche, **dadurch gekennzeichnet, dass** die Befestigungsmittel (70) einen in einer Längsrichtung der Welle (17) in der Welle verlaufenden Innengewindeabschnitt (67) aufweisen, der zu dem Ende (29) der Welle (17) hin, an dem das Geberelement (43) angeordnet ist, offen ist, wobei das Geberelement (43) an dem Innengewinde (67) angeschraubt ist.

6. Elektromotor (11) nach einem der vorhergehenden Ansprüche, **dadurch gekennzeichnet, dass** der Drehwinkelgeber (15) ein Gebergehäuse (37) aufweist, das mit einem Motorgehäuse (23) des Elektromotors (11) verbunden ist, wobei die Welle (11) durch eine erste Öffnung (40) des Motorgehäuses (23) und eine zweite Öffnung (42) des Gebergehäuses (37) verläuft, wobei sich die erste Öffnung (40) und die zweite Öffnung (42) gegenüberliegen.

7. Elektromotor (11) nach Anspruch 6, **dadurch gekennzeichnet, dass** ein Durchmesser der ersten Öffnung und/oder der zweiten Öffnung größer ist als ein Außendurchmesser des Anlageelements (57).
